# EUROPÄISCHE PATENTANMELDUNG

(11) **EP 1 842 751 A1**
(43) Veröffentlichungstag der Anmeldung: **10.10.2007**
(21) Anmeldenummer: 07007016.4
(22) Anmeldetag: 04.04.2007
(51) Int. Cl.: B60S 1/08

(54) **Optische Sensorvorrichtung**

(30) Priorität: 05.04.2006 DE 202006005665 U
(71) Anmelder: TRW Automotive Electronics & Components GmbH & Co. KG, 78315 Radolfzell (DE)
(72) Erfinder: Backes, Ulrich, Dr., 78315 Radolfzell (DE); Kail, Andreas, 78239 Rielasingen (DE)
(74) Vertreter: Strass, Jürgen

(57) **Zusammenfassung**

Eine optische Sensorvorrichtung (10, 10') ist an eine Scheibe (14) ankoppelbar, insbesondere an eine Windschutzscheibe eines Kraftfahrzeugs. Die Vorrichtung (10, 10') umfaßt eine Sensoreinheit (12), die einen Sender (26), einen Empfänger (28) sowie eine Lichtleiterstruktur mit einer dem Sender (26) zugeordneten ersten Fresnellinse (42) und einer dem Empfänger (28) zugeordneten zweiten Fresnellinse (44) aufweist. Die Fresnellinsen (42, 44) sind so angeordnet, daß ein vom Sender (26) ausgestrahltes divergierendes Lichtbündel (34) durch die erste Fresnellinse (42) parallel ausgerichtet und als paralleles Lichtbündel (34a) ohne weitere wesentliche Ablenkung in die Scheibe (14) eingekoppelt wird. Das parallele Lichtbündel (34a) wird nach wenigstens einer Reflexion in der Scheibe (14) als paralleles Lichtbündel (34b) aus der Scheibe (14) ausgekoppelt. Das Lichtbündel (34b) trifft durch die zweite Fresnellinse (44) als konvergierendes Lichtbündel auf den Empfänger (28).

## Beschreibung

Die Erfindung betrifft eine optische Sensorvorrichtung, die an eine Scheibe ankoppelbar ist, insbesondere an eine Windschutzscheibe eines Kraftfahrzeugs, mit einer Sensoreinheit, die einen Sender, einen Empfänger, sowie eine Lichtleiterstruktur mit einer dem Sender zugeordneten ersten Fresnellinse und einer dem Empfänger zugeordneten Fresnellinse aufweist.

Solche Sensorvorrichtungen werden hauptsächlich als Regensensoren in Kraftfahrzeugen zur automatischen Betätigung der Scheibenwischer eingesetzt. Die Verwendung klassischer Linsen zur Beeinflussung des Strahlengangs, wie z.B. die gegen die Windschutzscheibe geneigten Linsen des in der EP 1 068 112 B1 gezeigten Regensensors benötigen einen verhältnismäßig großen Bauraum.

Kleinere Bauformen sind, wie z.B. aus der WO 03/026937 A1 bekannt, durch Verwendung holographischer Sensoren möglich. Diese Sensoren basieren auf dem Prinzip der Lichtbeugung mit Hilfe von defraktiven Elementen und haben daher den prinzipbedingten Nachteil einer wesentlich geringeren Nutzlichtausbeute und einer höheren Störlichtempfindlichkeit.

Eine optische Sensorvorrichtung der eingangs genannten Art ist in der DE 196 08 648 C1 gezeigt. Zur Verringerung des Abstands zwischen dem Sender bzw. dem Empfänger und der Lichtleiterstruktur wird vorgeschlagen, die Lichteintritts- bzw. -austrittsflächen der Lichtleiterstruktur als Fresnellinsen auszubilden. Dennoch ist der erforderliche Bauraum dieser Vorrichtung aufgrund der aufwendigen Lichtleiterstruktur, die eine Anordnung der Sender und Empfänger tragenden Leiterplatte senkrecht zur Windschutzscheibe bedingt, sehr groß.

Die Erfindung schafft eine optische Sensorvorrichtung, die nur sehr wenig Bauraum erfordert und dennoch eine ausreichend große Fläche auf der Scheibe (Sensorfläche) abtasten kann.

Bei einer optischen Sensorvorrichtung der eingangs genannten Art wird dies erfindungsgemäß dadurch erreicht, daß die Fresnellinsen so angeordnet sind, daß ein vom Sender ausgestrahltes divergierendes Lichtbündel durch die erste Fresnellinse parallel ausgerichtet und als paralleles Lichtbündel ohne weitere wesentliche Ablenkung in die Scheibe eingekoppelt wird, daß das parallele Lichtbündel nach wenigsten einer Reflexion in der Scheibe als paralleles Lichtbündel aus der Scheibe ausgekoppelt wird, und daß das Lichtbündel durch die zweite Fresnellinse als konvergierendes Lichtbündel auf den Empfänger trifft. Die Erfindung beruht auf der Erkenntnis, daß sich mit einem parallel ausgerichteten Lichtbündel bei geeigneter schräger Einkopplung in die Scheibe eine relativ große Sensorfläche ergibt. Nach der Auskopplung des parallelen Lichtbündels aus der Scheibe wird das parallele Lichtbündel dann auf den Empfänger fokussiert. Die Fresnellinsen haben im Vergleich zu klassischen Linsen eine geringere Dicke und können so konstruiert werden, daß sie bei platzsparender Anordnung parallel zur Scheibe eine schräge Kopplung des Lichtbündels in die bzw. aus der Scheibe ermöglichen.

Vorzugsweise sind die Fresnellinsen so ausgebildet und angeordnet, daß das parallele Lichtbündel unter einem Winkel von etwa 45° in die Scheibe eingekoppelt bzw. ausgekoppelt wird.

Besonders günstig für die Herstellung und den Zusammenbau der erfindungsgemäßen Sensorvorrichtung ist eine Ausführungsform, bei der die beiden Fresnellinsen nebeneinander angeordnet und einstückig miteinander ausgeführt sind. Insbesondere können die beiden Fresnellinsen in einer Platte geformt sein, deren Vorderseite Fresnelstufen aufweist, wobei die Platte so angeordnet ist, daß die Vorderseite der Platte dem Sender bzw. dem Empfänger zugewandt ist. Abgesehen von der vereinfachten Herstellung der Linsen, bei der in eine quaderförmige Platte aus geeignetem optischen Material nur die erforderlichen Fresnelstufen eingearbeitet werden müssen, ist die relative Anordnung der beiden Fresnellinsen zueinander fest vorgegeben und kann sich weder beim Zusammenbau noch im montierten Zustand aufgrund von mechanischen Einwirkungen ändern.

Weitere vorteilhafte und zweckmäßige Ausgestaltungen der erfindungsgemäßen optischen Sensorvorrichtung ergeben sich aus den Unteransprüchen.

Die Erfindung wird nachfolgend anhand zweier Ausführungsbeispiele unter Bezugnahme auf die beigefügten Zeichnungen beschrieben. In den Zeichnungen zeigen schematisch:
- Figur 1 eine Draufsicht auf eine erste Ausführungsform der erfindungsgemäßen optischen Sensorvorrichtung;
- Figur 2 eine Schnittansicht entlang der Linie A-A in Figur 1; und
- Figur 3 eine Draufsicht auf eine zweite Ausführungsform der erfindungsgemäßen optischen Sensorvorrichtung.

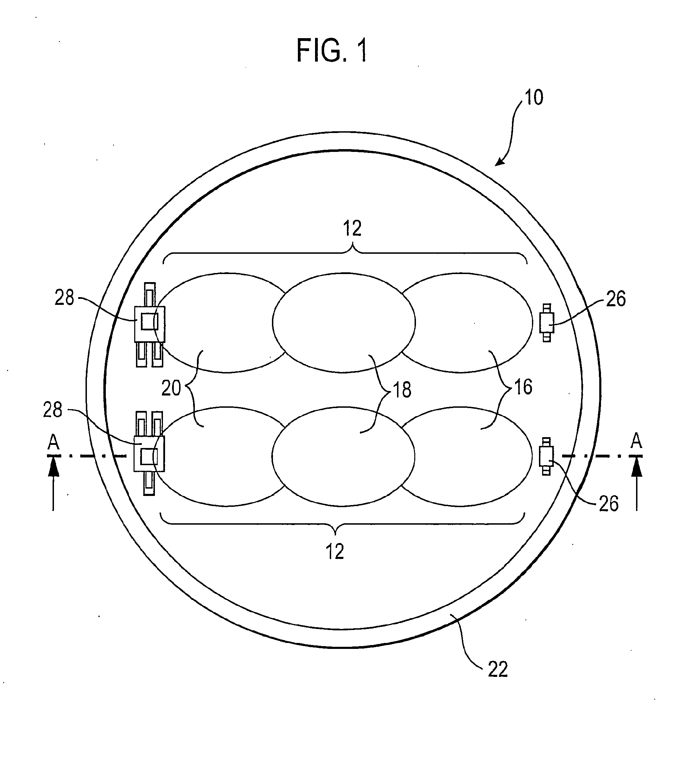

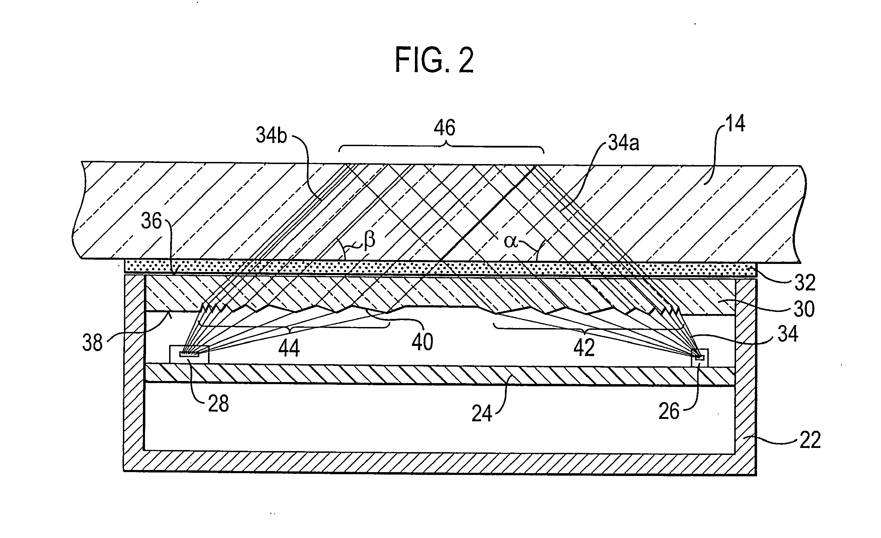

In Figur 1 ist eine erste Ausführungsform einer erfindungsgemäßen optischen Sensorvorrichtung 10 mit zwei gleichartigen Sensoreinheiten 12 zur Erfassung der Benetzung einer Scheibe dargestellt. Die Sensorvorrichtung 10 wird im folgenden für den Einsatz als Regensensor beschrieben, der auf der Windschutzscheibe 14 (siehe Figur 2) eines Kraftfahrzeugs montiert ist. In der Darstellung der Figur 1 sind einige Komponenten der Sensorvorrichtung 10 weggelassen, um die später noch genauer beschriebenen Lichtauftreffflächen 16, 18, 20 deutlicher hervorzuheben.

Der grundsätzliche Aufbau der Sensoreinheiten 12 geht aus der Schnittdarstellung der Figur 2 hervor. In einem einseitig offenen Gehäuse 22 ist eine Leiterplatte 24 mit einem Sender 26 und einem Empfänger 28 für jede Sensoreinheit 12 untergebracht. Im montierten Zustand der Sensorvorrichtung 10, wenn also die Sensorvorrichtung 10 an einer Windschutzscheibe 14 angebracht ist, sind die Windschutzscheibe 14 und die Leiterplatte 24 im wesentlichen parallel zueinander ausgerichtet. Zwischen der Leiterplatte 24 und der Windschutzscheibe 14 ist eine Lichtleiterstruktur angeordnet, deren wesentliche Komponente eine Linsenplatte 30 ist. Das Gehäuse 22 und die Leiterplatte 24 sind über einen Koppler 32 an der Windschutzscheibe 14 befestigt.

Der Sender 26 strahlt Licht in einem bestimmten Frequenzbereich aus, wobei der Begriff "Licht" nicht auf sichtbares Licht beschränkt ist, sondern z.B. auch Strahlung im Infrarotbereich umfassen kann. Das Licht wird vom Sender 26 als divergierendes, auf einen ersten Teilabschnitt der Linsenplatte 30 gerichtetes Lichtbündel 34 ausgestrahlt. Der Empfänger 28 ist auf den Sender 26 abgestimmt und gibt entsprechend dem registrierten Lichteinfall Signale an eine (nicht dargestellte) Auswerteeinheit ab.

Die Linsenplatte 30 ist grundsätzlich quaderförmig und parallel zur Windschutzscheibe 14 angeordnet. Die Linsenplatte 30 hat eine im wesentliche plane, der Windschutzscheibe 14 zugewandte Rückseite 36. Die dem Sender 26 bzw. Empfänger 28 zugewandte Vorderseite 38 der Linsenplatte 30 weist Fresnelstufen 40 auf. Die Linsenplatte 30 kann in mehrere Abschnitte unterteilt werden. Der zuvor erwähnte erste Teilabschnitt bildet eine asphärische erste Fresnellinse 42, deren optische Achse gegenüber der Windschutzscheibe 14 um etwa 45° geneigt ist. Ein zweiter Teilabschnitt der Linsenplatte 30 bildet eine asphärische zweite Fresnellinse 44, deren optische Achse in entgegengesetzter Richtung ebenfalls um etwa 45° gegenüber der Windschutzscheibe 14 geneigt ist. Die beiden Fresnellinsen 42, 44 sind spiegelsymmetrisch zueinander aufgebaut. Für die Herstellung der Fresnellinsen 42, 44 sind ausgehend von einer quaderförmigen Platte aus geeignetem optischen Material nur geringfügige Modifikationen auf deren Vorderseite zur Bildung der erforderlichen Fresnelstufen 40 erforderlich.

Der Koppler 32 ist im dargestellten Ausführungsbeispiel durch ein transparentes, elastisches und im wesentlichen planes Medium gebildet, das im Frequenzbereich des vom Sender 26 ausgestrahlten Lichts keine ausgeprägten Brechungseigenschaften hat.

Im Betrieb trifft das vom Sender 26 in Richtung der Linsenplatte 30 ausgestrahlte divergierende Lichtbündel 34 auf die erste Fresnellinse 42 (Lichtauftrefffläche 16 in Figur 1). Die erste Fresnellinse 42 sorgt für eine im wesentlichen parallele Ausrichtung der Strahlen des Lichtbündels 34. Die Strahlen werden somit als parallel ausgerichtetes Lichtbündel 34a durch den Koppler 32 in die Windschutzscheibe 14 eingekoppelt. Der Eintrittswinkel α beträgt hierbei etwa 45°. In der Windschutzscheibe 14 wird das Lichtbündel 34a total reflektiert, wobei die Lichtstrahlen weiterhin parallel orientiert bleiben. Die Auftrefffläche des parallel in die Windschutzscheibe eingekoppelten Lichtbündels 34a (Lichtauftrefffläche 18 in Figur 1) definiert die Sensorfläche 46, d.h. diejenige Fläche der Windschutzscheibe 14, die mittels der jeweiligen Sensoreinheit 12 auf Benetzung untersucht wird.

Aufgrund des symmetrischen Aufbaus des Kopplers 32 und der Linsenplatte 30 ist der Strahlengang des Lichtbündels nach der Totalreflexion an der Windschutzscheibe 14 symmetrisch zum zuvor beschriebenen Strahlengang. Das heißt, das reflektierte parallele Lichtbündel 34b wird über den Koppler 32 unter einem Austrittswinkel β von etwa 45° aus der Windschutzscheibe 14 aus-, und den zweiten Teilabschnitt der Linsenplatte 30 eingekoppelt (Lichtauftrefffläche 20 in Figur 1), und die zweite Fresnellinse 44 fokussiert das Lichtbündel 34b auf den Empfänger 28.

Bei einer (nicht gezeigten) alternativen Ausbildung des Kopplers weist dieser ein starres Element mit einer der Windschutzscheibe 14 zugewandten Rückseite und einer der Lichtleiterstruktur zugewandten Vorderseite auf. Die Rückseite ist an die Form der Windschutzscheibe 14 angepaßt (d. h. sie ist im wesentlichen plan) und mit einem Haftvermittler an der Windschutzscheibe 14 befestigt. Die Vorderseite hat Koppelflächen, die senkrecht zur parallelen Ausrichtung des Lichtbündels ausgerichtet sind. In diesem Fall weist die Lichtleiterstruktur eine an die Vorderseite des starren Kopplerelements angepaßte und mit dieser verbundene Rückseite auf.

Für eine bessere Signalauswertung werden die von den Empfängern 28 des Sensoreinheit-Paares gelieferten Signale in der Auswerteeinheit einer Differenzbildung unterzogen. Gleiches gilt für eventuelle weitere Paare von Sensoreinheiten 12, die zur Sensorvorrichtung 10 gehören.

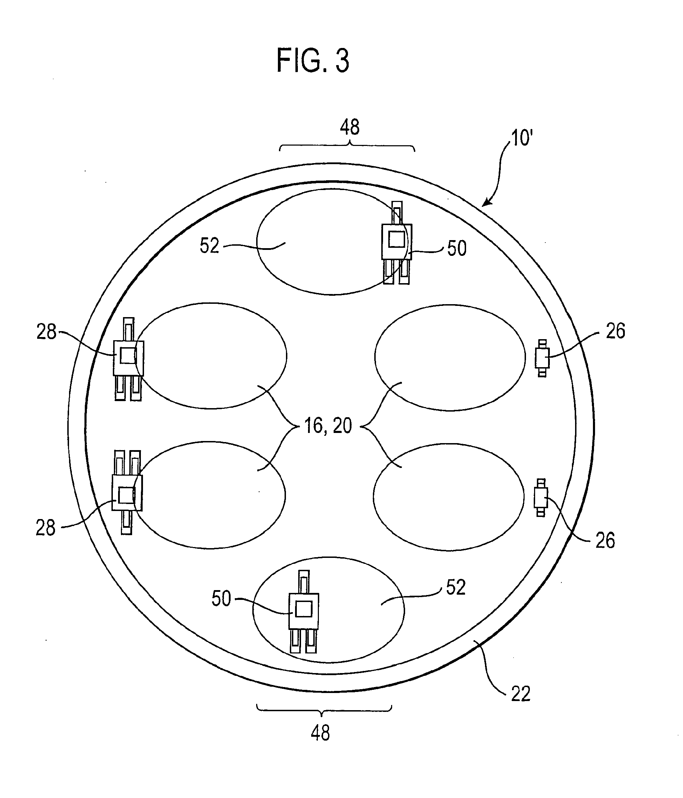

In Figur 3 ist eine zweite Ausführungsform einer Sensorvorrichtung 10' gemäß einer Weiterbildung der Erfindung dargestellt. Zusätzlich zu den Sensoreinheiten 12 zur Erfassung der Benetzung der Windschutzscheibe 14 sind hier zusätzliche Taglicht-Sensoreinheiten 48 vorgesehen. Die Taglicht-Sensoreinheiten 48 weisen jeweils einen Lichtempfänger 50 und eine Lichtleiterstruktur mit einer weiteren Fresnellinse (in Figur 3 nicht sichtbar) auf, die entsprechend den zuvor beschriebenen Fresnellinsen 42, 44 ausgebildet und angeordnet ist. Jede Fresnellinse der Taglicht-Sensoreinheiten 48 bildet Licht aus einem definierten Bereich 52 der Umgebung auf dem zugehörigen Lichtempfänger 50 ab. Damit erweitert sich die Funktionalität dahingehend, daß mit der kompakt aufgebauten Sensorvorrichtung 10' neben einer automatischen Scheibenwischerbetätigung auch eine automatische Steuerung des Fahrlichts ermöglicht wird.

Bei allen Ausführungsformen ist es grundsätzlich möglich, mehrere oder sogar alle Fresnellinsen in einer einzigen Linsenplatte auszubilden.

## Patentansprüche

1. Optische Sensorvorrichtung (10, 10'), die an eine Scheibe (14) ankoppelbar ist, insbesondere an eine Windschutzscheibe eines Kraftfahrzeugs, mit einer Sensoreinheit (12), die einen Sender (26), einen Empfänger (28) sowie eine Lichtleiterstruktur mit einer dem Sender (26) zugeordneten ersten Fresnellinse (42) und einer dem Empfänger (28) zugeordneten zweiten Fresnellinse (44) aufweist, **dadurch gekennzeichnet, daß** die Fresnellinsen (42, 44) so angeordnet sind, daß ein vom Sender (26) ausgestrahltes divergierendes Lichtbündel (34) durch die erste Fresnellinse (42) parallel ausgerichtet und als paralleles Lichtbündel (34a) ohne weitere wesentliche Ablenkung in die Scheibe (14) eingekoppelt wird, daß das parallele Lichtbündel (34a) nach wenigsten einer Reflexion in der Scheibe (14) als paralleles Lichtbündel (34b) aus der Scheibe (14) ausgekoppelt wird, und daß das Lichtbündel (34b) durch die zweite Fresnellinse (44) als konvergierendes Lichtbündel auf den Empfänger (28) trifft.

2. Optische Sensorvorrichtung nach Anspruch 1, **dadurch gekennzeichnet, daß** die Fresnellinsen (42, 44) so ausgebildet und angeordnet sind, daß das parallele Lichtbündel (34a, 34b) unter einem Winkel (α, β) von etwa 45° in die Scheibe (14) eingekoppelt bzw. ausgekoppelt wird.

3. Optische Sensorvorrichtung nach Anspruch 1 oder 2, **dadurch gekennzeichnet, daß** die beiden Fresnellinsen (42, 44) spiegelsymmetrisch zueinander aufgebaut sind.

4. Optische Sensorvorrichtung nach einem der vorhergehenden Ansprüche, **dadurch gekennzeichnet, daß** die beiden Fresnellinsen (42, 44) nebeneinander angeordnet und einstückig miteinander ausgeführt sind.

5. Optische Sensorvorrichtung nach einem der vorhergehenden Ansprüche, **dadurch gekennzeichnet, daß** die beiden Fresnellinsen (42, 44) in einer Platte (30) geformt sind, deren Vorderseite (38) Fresnelstufen (40) aufweist, wobei die Platte (30) so angeordnet ist, daß die Vorderseite (38) der Platte (30) dem Sender (26) bzw. dem Empfänger (28) zugewandt ist.

6. Optische Sensorvorrichtung nach Anspruch 5, **dadurch gekennzeichnet, daß** die Rückseite (36) der Platte (30) im wesentlichen plan und der Scheibe (14) zugewandt ist.

7. Optische Sensorvorrichtung nach einem der vorhergehenden Ansprüche, **dadurch gekennzeichnet, daß** die Lichtleiterstruktur mittels eines Kopplers (32) an der Scheibe (14) angebracht ist.

8. Optische Sensorvorrichtung nach Anspruch 7, **dadurch gekennzeichnet, daß** der Koppler (32) durch ein transparentes, elastisches und im wesentlichen planes Medium gebildet ist.

9. Optische Sensorvorrichtung nach Anspruch 7, **dadurch gekennzeichnet, daß** der Koppler (32) ein starres Element mit einer der Scheibe (14) zugewandten Rückseite und einer der Lichtleiterstruktur zugewandten Vorderseite aufweist, wobei die Rückseite im wesentlichen plan ist und die Vorderseite Koppelflächen hat, die senkrecht zur parallelen Ausrichtung des Lichtbündels (34a, 34b) ausgebildet sind.

10. Optische Sensorvorrichtung nach Anspruch 9, **dadurch gekennzeichnet, daß** die Lichtleiterstruktur eine an die Vorderseite des starren Elements des Kopplers (32) angepaßte Rückseite aufweist.

11. Optische Sensorvorrichtung nach einem der vorhergehenden Ansprüche, **dadurch gekennzeichnet, daß** der Sender (26) und der Empfänger (28) auf einer Leiterplatte (24) angeordnet sind, die im wesentlichen parallel zur Scheibe (14) ausgerichtet ist.

12. Optische Sensorvorrichtung nach einem der vorhergehenden Ansprüche, **dadurch gekennzeichnet, daß** sie eine gerade Anzahl von Sensoreinheiten (12) und eine Auswerteeinheit umfaßt, wobei in der Auswerteeinheit für jedes Paar Sensoreinheiten (12) die beiden von den Empfängern (28) gelieferten Signale einer Differenzbildung unterzogen werden.

13. Optische Sensorvorrichtung nach einem der vorhergehenden Ansprüche, **dadurch gekennzeichnet, daß** in einem Gehäuse (22) der Sensorvorrichtung (10') wenigstens eine zusätzliche Taglicht-Sensoreinheit (48) untergebracht ist, wobei die Taglicht-Sensoreinheit (48) einen Lichtempfänger (50) und eine Lichtleiterstruktur mit einer weiteren Fresnellinse aufweist, die Licht aus einem definierten Bereich (52) der Umgebung auf dem Lichtempfänger (50) abbildet.

14. Optische Sensorvorrichtung nach Anspruch 13, **dadurch gekennzeichnet, daß** die weitere Fresnellinse und wenigstens eine andere Fresnellinse (42, 44) in derselben Platte (30) geformt sind.
